**Europäisches Patentamt**

**European Patent Office**

**Office européen des brevets**

(19)

(11) Veröffentlichungsnummer: **0 086 250**
**B1**

(12) **EUROPÄISCHE PATENTSCHRIFT**

(45) Veröffentlichungstag der Patentschrift:
20.03.85

(51) Int. Cl.⁴: **F 16 J 15/32**

(21) Anmeldenummer: **82106992.9**

(22) Anmeldetag: **03.08.82**

(54) **Kassettendichtung.**

(30) Priorität: **12.02.82 DE 3204989**

(43) Veröffentlichungstag der Anmeldung:
**24.08.83 Patentblatt 83/34**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**FR - A - 2 343 942**
**GB - A - 1 034 756**
**GB - A - 1 091 397**
**US - A - 3 086 781**
**US - A - 3 682 488**

(73) Patentinhaber: **Firma Carl Freudenberg, Höhnerweg 2,
D-6940 Weinheim/Bergstrasse (DE)**

(72) Erfinder: **Drucktenhengst, Rolf, Dresdenerstrasse 14,
D-6840 Lampertheim-Hofheim (DE)**

(74) Vertreter: **Weissenfeld-Richters, Helga, Dr.,
Höhnerweg 2, D-6940 Weinheim/Bergstrasse (DE)**

ACTORUM AG

# Beschreibung

Die Erfindung betrifft eine Kassettendichtung, bestehend aus einem Innen- und einem Aussenring mit entgegengesetzt winkelförmigem Profil, die unter Bildung eines im wesentlichen rechtekkig begrenzten Hohlraumes ineinanderliegend zusammengefügt sind, bei der der Innenring eine Gummibeschichtung zur Abstützung und Abdichtung auf der Achse oder Welle aufweist, bei der der sich in radialer Richtung erstreckende, von dem abgedichteten Medium abgewandte Schenkel eines der beiden Ringe eine in den Hohlraum vorspringende Dichtlippe aus einem gummielastischen Werkstoff aufweist, die federnd an dem sich in axialer Richtung erstreckenden Schenkel des anderen Ringes anliegt, wobei der Dichtlippe wenigstens eine Staublippe in einem axialen Abstand nachgeschaltet ist und bei der der dem abgedichteten Mediums zugewandte, sich in radialer Richtung erstreckende Schenkel des einen Ringes gegenüber dem sich in axialer Richtung erstreckenden Schenkel des anderen Ringes durch einen Labyrinthspalt abgedichtet ist.

Eine Kassettendichtung der vorstehend angesprochenen Art ist aus der GB-A Nr. 1034756 bekannt. Die der Dichtlippe zugeordnete Fläche ist zylindrisch ausgebildet und dient zugleich als Gegenlauffläche für die Staublippe. Diese vermag das Eindringen von Schmutz nicht in wünschenswerter Weise zu verhindern. Eingedrungener Schmutz wird nicht herausgefördert und kann nach entsprechender Ansammlung zu einer Beeinträchtigung der Funktion der Dichtlippe führen.

Die FR-A Nr. 2343942 nimmt Bezug auf eine Dichtung, bei der die den Staublippen zugeordnete Kontaktfläche mit sich verminderndem Durchmesser in die der Dichtlippe zugeordnete Kontaktfläche übergeht. Beide Kontaktflächen sind zylindrisch ausgebildet, was eine Selbstreinigung erschwert. Die Dichtlippe wird dadurch vom Druck des abgedichteten Mediums unmittelbar beaufschlagt. Sie kann durch Druckstösse zerstört werden.

Der Erfindung liegt die Aufgabe zugrunde, eine Kassettendichtung zu entwickeln, die weitgehend unempfindlich ist gegenüber einer Beaufschlagung der Aussenseite mit Schmutz.

Diese Aufgabe wird erfindungsgemäss dadurch gelöst, dass die der Staublippe zugeordnete Kontaktfläche des anderen Ringes mit sich verminderndem Durchmesser in die der Dichtlippe zugeordnete Kontaktfläche dieses Ringes übergeht und dass die der Staublippe zugeordnete Kontaktfläche dieses Ringes und die abgedichtete Achse einen spitzen Winkel einschliessen.

Die der Staublippe zugeordnete Kontaktfläche geht mit sich verminderndem Durchmesser in die der Dichtlippe zugeordnete Kontaktfläche über. In den Bereich der Dichtlippe eingedrungene Verschmutzungen, wie beispielsweise bei einer Überlastung der Staublippe immer wieder zu erwarten, werden unter dem Einfluss der Fliehkräfte des sich drehenden Rades selbsttätig aus der kritischen Zone herausgefördert, ohne zu einer weiteren Schädigung oder Störung der Funktion führen zu können. Unter der Dichtlippe hindurchgedrungenes Lecköl begünstigt kontinuierlich diesen Vorgang einer selbsttätigen Abreinigung.

Bei der vorgeschlagenen Ausführung bewirkt der Labyrinthspalt zwischen dem abgedichteten Raum und dem Innenraum der Kassettendichtung eine starke Dämpfung spontaner Druckspitzen des abgedichteten Mediums. Diese können sich infolgedessen nicht in unverminderter Höhe auf die Dichtlippe auswirken und es genügt zur Beherrschung der auftretenden Kräfte ein wesentlich verminderter Querschnitt. Die Dichtlippe zeichnet sich dadurch durch eine wesentlich verbesserte Flexibilität aus und sie vermag einem unrunden Lauf der abgedichteten Radnabe in ausgezeichneter Weise zu folgen.

Die Dichtlippe kann wahlweise an dem Innen- oder an dem Aussenring befestigt sein. In bezug auf die Abdichtung eines um eine ruhende Achse rotierenden Gehäuses hat es sich als vorteilhaft bewährt, wenn die Dichtlippe mit dem Innenring verbunden ist. Bei Ausführungen, die für die Abdichtung drehender Wellen bestimmt sind, hat es sich demgegenüber als günstiger erwiesen, wenn die Dichtlippe mit dem Aussenring verbunden ist.

Der Labyrinthspalt kann durch eine Nut des Innenringes gebildet werden, in die der sich nach innen erstreckende Schenkel des Profils des Aussenringes eingreift. Eine entsprechende Nut lässt sich kostengünstig durch eine mechanische Bearbeitung des Innenringes erzeugen. Sie lässt sich auf diese Weise auch exakt und präzise ausführen, was für eine gute Funktion von grosser Bedeutung ist.

In der Massenfertigung ist es häufig günstiger, wenn die Nut durch einen den sich in radialer Richtung nach innen erstreckenden Schenkel des Profils des Aussenringes in einem Abstand U-förmig umgreifenden Vorsprung des Innenringes gebildet wird. Zugleich wird durch eine derartige Nut der Aussenring in seiner axialen und radialen Richtung gegenüber dem Innenring festgelegt und bildet mit diesem zusammen eine komplette Einbaueinheit, die keiner besonderen nachträglichen Justierung bedarf. Beide Ringe werden gemeinsam eingebaut und der gewünschte axiale Abstand von den Flankenflächen der Nut ergibt sich selbständig, ähnlich den Vorgängen an einer unbetätigten Schreibbremse bei der ersten Radumdrehung. Der Labyrinthspalt hat eine vergleichbar geringe Breite von 0,1 bis 3, bevorzugt zwischen 0,2 und 1,0 mm. Die Länge ist wenigstens 3mal so gross wie die Breite, bevorzugt wenigstens 5mal. Sie darf, um den für eine gute Kühlung und Schmierung der Dichtlippe erforderlichen Flüssigkeitsaustausch mit dem abgedichteten Raum nicht zu beeinträchtugen, dass 50fache der Breite nicht überschreiten. Die Angaben beziehen sich in Fällen, in denen der Labyrinthspalt in verschiedenen Zonen eine unterschiedliche Breite hat, auf den jeweiligen Durchschnittswert.

Die Anbringung eines Labyrinthspaltes zwischen dem abgedichteten Raum und dem Innenraum der Kassettendichtung bedingt naturgemäss eine Behinderung des Flüssigkeitsaustausches zwischen beiden Bereichen. Um dennoch eine kontinuierliche Erneuerung des in der Kassettendichtung enthaltenen Flüssigkeitsvolumens zu erzielen, hat es sich als vorteilhaft bewährt, wenn der Labyrinthspalt wenigstens eine seinen Querschnitt vermindernde Drosselstelle aufweist. Diese kann beispielsweise durch eine in den Labyrinthspalt vorspringende Verdickung des Innen- und/oder des Aussenringes gebildet werden. Sie bedingt eine lokale Druckerhöhung im Innenraum der Kassettendichtung, deren Lage sich parallel zur Radumdrehung kontinuierlich verändert. Hiermit verbunden ist ein Pumpeffekt, der einen Flüssigkeitsaustausch zwischen dem Inneren der Kassettendichtung und dem abzudichtendem Raum in genügendem Masse gewährleistet. Durch eine Vielzahl von gegebenenfalls gleichmässig auf dem Umfang verteilten Drosselstellen dieser Art lässt sich die Wirkung nach Bedarf vergrössern. Häufige Richtungsänderungen des Spaltes, bezogen auf die Länge, ermöglichen eine verbesserte Dämpfungswirkung.

Die Kontaktfläche der Staublippe geht kontinuierlich mit vermindertem Durchmesser in die Kontaktfläche der Dichtlippe über, was die Herausförderung von eingedrungenem Schmutz in starkem Masse begünstigt. Die Kontaktflächen der Staublippe und die abgedichtete Achse schliessen einen spitzen Winkel ein, der beispielsweise 30 bis 60° betragen kann. Bevorzugt ist der Bereich zwischen 35 und 48°.

Dabei ergibt sich zugleich der Vorteil, dass die Staublippe in axialer Richtung durch den sie überragenden Aussenring vor mechanischen Beschädigungen geschützt wird und zugleich mit besonders grosser Flexibilität an dem Aussenring anliegt, weil der Winkel zwischen beiden Flächen ohne Schwierigkeiten auf Werte von 10 bis 12° einstellbar ist. Der Ventileffekt der Staublippe, der vor allem darin besteht, die Herausförderung eingedrungenen Schmutzes zu begünstigen und das Eindringen von Schmutz zu verhindern, wird hierdurch stark gefördert.

Eine beispielhafte Ausführung der vorgeschlagenen Kassettendichtung ist in den in der Anlage beigefügten Zeichnungen in halbgeschnittener Darstellung wiedergegeben. Es zeigen:

Fig. 1 eine Kassettendichtung für ein um eine ruhende Achse umlaufendes Gehäuse,

Fig. 2 eine Kassettendichtung für eine die Wandung eines Gehäuses durchstossende, sich drehende Welle,

Fig. 3 eine Kassettendichtung mit der Dichtlippe vorgeschaltetem, extrem lang ausgebildetem, sich in axialer Richtung erstreckendem Labyrinthspalt,

Fig. 4 eine Kassettendichtung mit einem Labyrinthspalt, der in einem Teilbereich durch eine in den Innenring eingepresste Blechkappe begrenzt wird,

Fig. 5 einen Ausschnitt aus einer Kassettendichtung ähnlich Fig. 1, wobei der doppelten Staublippe eine weitere doppelte Staublippe nachgeschaltet ist, und

Fig. 6 einen Ausschnitt aus einer Kassettendichtung ähnlich Fig. 1, bei der in dem Zwischenraum zwischen den einzelnen Staublippen ein Ring aus einem elastischen Schaumstoff angeordnet ist.

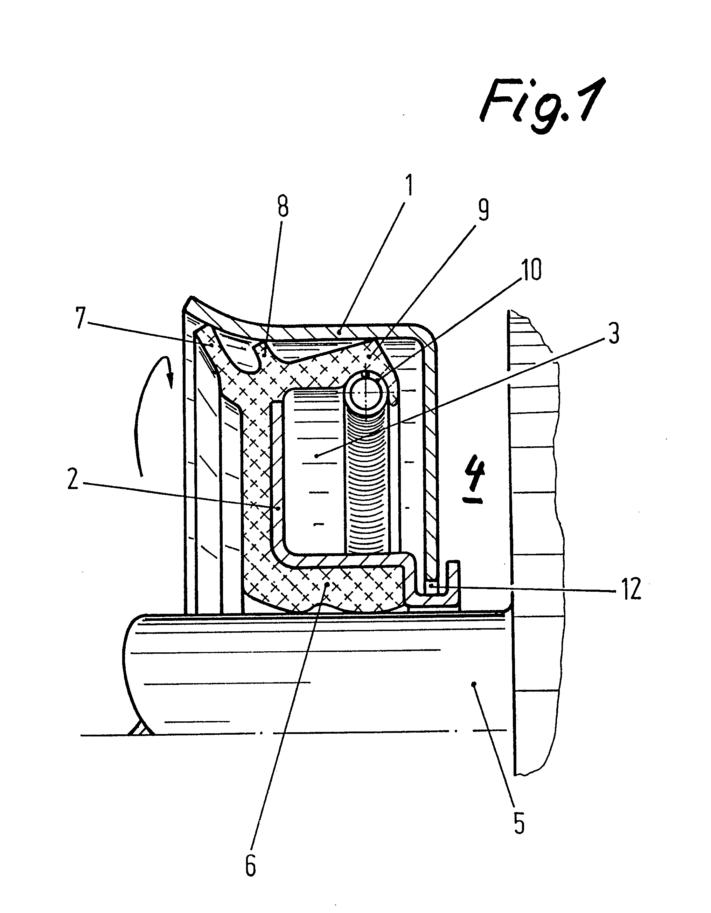

Die dargestellte Kassettendichtung gemäss Fig. 1 besteht aus einem Aussenring 1 und einem Innenring 2 mit jeweils winkelförmigem Profil. Beide Ringe sind derart zusammengefügt, dass sie gemeinsam einem im wesentlichen rechteckig begrenzten Hohlraum 3 umschliessen. Der Innendurchmesser beträgt 120 mm, der Aussendurchmesser 160 mm.

Der sich in axialer Richtung erstreckende Schenkel des Innenringes ist auf der Innenseite mit einer Gummischicht 6 versehen und wird durch diese auf der Welle 5 sowohl abgetragen als auch gegenüber deren Oberfläche abgedichtet. Bedingt durch die Gummischicht 6 ergibt sich eine gute relative Beweglichkeit des Innenringes auf der Oberfläche der abgedichteten Welle. Die Dicke der Gummischicht beträgt 3 mm.

Der sich in radialer Richtung erstreckende Schenkel des Innenringes 2 ist auf der Aussenseite durchgehend mit Gummi beschichtet, wodurch Korrosionen in diesem Bereich vermieden werden. Die Gummischicht geht gleichmässig über in Staublippen 7 und 8 sowie in die Dichtlippe 9, die auf der Innenseite des sich in axialer Richtung erstreckenden Schenkels des Aussenringes 1 anliegt. Die Anpressung der Dichtlippe wird dabei im wesentlichen durch im Inneren aufgelegte Ringwendelfeder 10 aus einem metallischen Werkstoff bestimmt. Die Gegenlauffläche der Staublippe 7 schliesst mit der abgedichteten Achse einen Winkel von 40° ein.

Der abgedichtete Raum 4 und der Innenraum der Kassettendichtung 3 sind durch den Labyrinthspalt 12 verbunden. Dieser ergibt sich durch eine U-förmige Umbördelung des sich in axialer Richtung erstreckenden Schenkels des Innenringes 2 und den sich in radialer Richtung in die Umbördelung hineinerstreckenden, radialen Schenkel des Aussenringes 1. Der Labyrinthspalt hat in axialer Richtung eine Breite von 0,2 mm, in radialer Richtung nach innen eine Breite von 0,8 mm.

Der Aussenring hat eine Blechstärke von 1,5 mm, der Innenring eine Blechstärke von 1,0 mm. Beide Ringe bestehen aus Stahlblech und sind unlösbar zu einer Einheit verbunden. Sie werden als geschlossene Einheit montiert und benötigen zur Inbetriebnahme keines besonderen Justieraufwandes. Die beschriebene Ausführung eignet sich ausgezeichnet für die Radlagerabdichtung eines Kraftfahrzeuges.

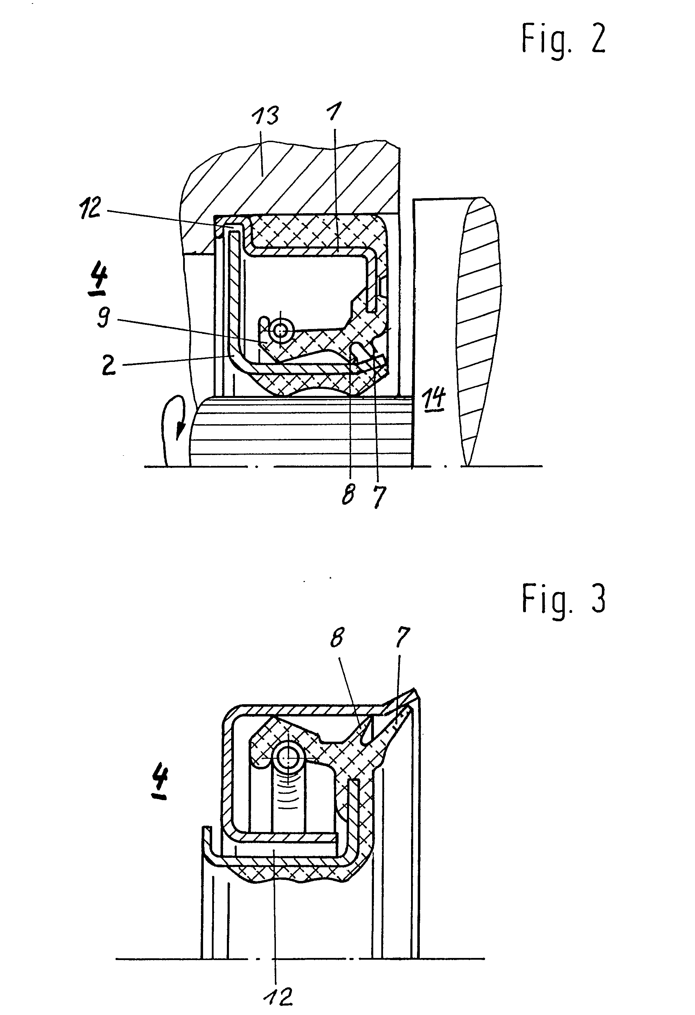

Fig. 2 zeigt eine Ausführung, bei der der Aussenring 11 der Kassettendichtung ruhend und flüssigkeitsdicht in der aufnehmenden Bohrung einer Gehäusewandung 13 gelagert ist. Der Innenring 2 ist verdrehsicher mit der sich drehenden Welle 14 verbunden und folgt deren Drehbewegungen.

Der Aussenring 11 weist eine Dichtlippe 9 auf, die federelastisch auf dem Aussenumfang des sich in axialer Richtung erstreckenden Schenkels des Innenringes 2 angepresst wird.

Hierdurch wird eine gute Flüssigkeitsabdichtung des Dichtspaltes bewirkt.

Der Dichtlippe 9 ist der Labyrinthspalt 12 in Richtung des abgedichteten Mediums vorgeschaltet, die Staublippen 7 und 8 sind der Dichtlippe in Richtung der druckabgewandten Seite nachgeschaltet. Die Gegenlauffläche der Staublippe 7 schliesst mit der Welle einen Winkel von 30° ein.

Fig. 3 zeigt eine Ausführung, die hinsichtlich ihrer Funktion und der bevorzugten Verwendung im wesentlichen einer solchen nach Fig. 1 entspricht. Die Durchlasslänge des Labyrinthspaltes ist im Gegensatz zu derjenigen nach Fig. 1 stark vergrössert, was eine verbesserte Dämpfung von Druckstössen des abgedichteten Mediums bewirkt. Diese vermögen die Dichtlippe daher nur in einem nochmal verminderten Masse zu erreichen. Die Gegenlauffläche der Staublippe 7 schliesst mit der nicht dargestellten Achse einen Winkel von 35° ein.

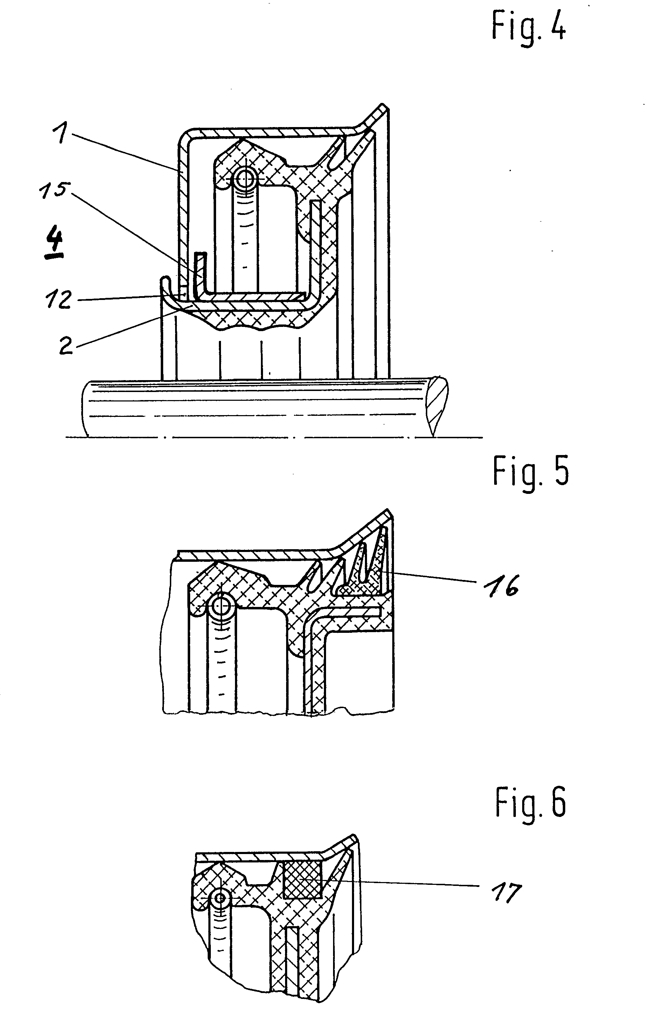

Fig. 4 nimmt Bezug auf eine Ausführung ähnlich Fig. 1, bei der der Labyrinthspalt 12 durch den sich in radialer Richtung erstreckenden Schenkel des Aussenringes 1 begrenzt wird sowie durch die beiderseits zugeordneten Schenkel des Innenringes 2 und einer verdrehsicher darin eingepressten Blechkappe 15. Länge und Weite des Labyrinthspaltes lassen sich bei einer entsprechenden Ausführung besonders feinfühlig einstellen.

Die Fig. 5 und 6 nehmen Bezug auf Ausschnitte von Ausführungen ähnlich den Fig. 1, 3 oder 4. In Fig. 5 ist der doppelten Staublippe eine weitere, doppelte Staublippe 16 vorgeschaltet, in Fig. 6 ist in dem Zwischenraum zwischen den beiden Staublippen ein Ring aus elastischem Schaumstoff eingesetzt, beispielsweise aus einem offenporigen Polyurethanschaum. Einer Beaufschlagung der Dichtlippe aus Richtung der druckabgewandten Seite mit grobem Schmutz oder Staub wird hierdurch wirksam begegnet.

## Patentansprüche

1. Kassettendichtung aus einem Innen- und einem Aussenring (1, 2) mit entgegengesetzt winkelförmigem Profil, die unter Bildung eines im wesentlichen rechteckig begrenzten Hohlraumes (3) ineinanderliegend zusammengefügt sind, bei der der Innenring (2) eine Gummibeschichtung (6) zur Abstützung und Abdichtung auf einer Achse oder Welle (5) aufweist, bei der der sich in radialer Richtung erstreckende, von dem abgedichteten Medium (4) abgewandte Schenkel des einen Ringes eine in den Hohlraum vorspringende Dichtlippe (9) aus einem gummielastischen Werkstoff aufweist, die an dem sich in axialer Richtung erstreckenden Schenkel des anderen Ringes anliegt, bei der der Dichtlippe wenigstens eine Staublippe (7, 8) in einem axialen Abstand nachgeschaltet ist und bei der der dem abgedichteten Medium zugewandte, sich in radialer Richtung erstreckende Schenkel des anderen Ringes gegenüber dem sich in axialer Richtung erstreckenden Schenkel des einen Ringes durch einen Labyrinthspalt (12) abgedichtet ist, dadurch gekennzeichnet, dass die der Staublippe (7, 8) zugeordnete Kontaktfläche des anderen Ringes mit sich verminderndem Durchmesser in die der Dichtlippe (9) zugeordnete Kontaktfläche dieses Ringes übergeht und dass die der Staublippe zugeordnete Kontaktfläche dieses Ringes und die abgedichtete Achse oder Welle (5) einen spitzen Winkel einschliessen.

2. Kassettendichtung nach Anspruch 1, dadurch gekennzeichnet, dass der spitze Winkel 30 bis 60° beträgt.

3. Kassettendichtung nach den Ansprüchen 1 und 2, dadurch gekennzeichnet, dass Dichtlippe (9) und Staublippe (7, 8) zur Abdichtung eines sich um eine ruhende Achse drehenden Gehäuses mit dem Innenring verbunden sind.

4. Kassettendichtung nach den Ansprüchen 1 und 2, dadurch gekennzeichnet, dass Dichtlippe (9) und Staublippe (7, 8) zur Abdichtung einer sich drehenden Welle mit dem Aussenring verbunden sind.

5. Kassettendichtung nach den Ansprüchen 1 bis 4, dadurch gekennzeichnet, dass wenigstens zwei Staublippen (7, 8) vorgesehen sind.

## Claims

1. Seal assembly consisting of an inner and an outer ring (1, 2) which each have a profile angled in the opposite direction to the other and which are joined together so as to lie inside one another, to form a cavity (3) limited essentially rectangularly, in which seal assembly the inner ring (2) has a rubber coating (6) for supporting it and sealing it off on an axle or shaft (5); the leg of one ring, this leg extending radially and facing away from the sealed-off medium (4), has a sealing lip (9) which projects into the cavity and is made of an elastomeric material, and which rests against the axially extending leg of the other ring; the sealing lip is followed at an axial distance by at least one dust lip (7, 8), and the leg of the other ring, this leg facing the sealed-off medium and extending in a radial direction, is sealed off by means of a labyrinth gap (12) from the axially extending leg of the first ring, characterised in that the contact surface of the other ring, this contact surface being assigned to the dust lip (7, 8), merges with a diminishing diameter into the contact surface of this ring which is assigned to the sealing lip (9), and in that the contact surface of this ring, assigned to the dust lip, and the sealed-off axle or shaft (5) form an acute angle.

2. Seal assembly according to Claim 1, characterised in that the acute angle is of 30 to 60°.

3. Seal assembly according to Claims 1 and 2, characterised in that the sealing lip (9) and the dust lip (7, 8) are connected to the inner ring in order to seal off a housing rotating about a stationary axle.

4. Seal assembly according to Claims 1 and 2, characterised in that the sealing lip (9) and the dust lip (7, 8) are connected to the outer ring in order to seal off a rotating shaft.

5. Seal assembly according to Claims 1 to 4, characterised in that at least two dust lips (7, 8) are provided.

## Revendications

1. Cartouche d'étanchéité constituée d'un anneau intérieur et d'un anneau extérieur (1, 2) ayant des profils contraires en forme de cornière qui sont assemblés l'un dans l'autre en constituant un espace creux (3) limité et de forme essentiellement rectangulaire, dans laquelle l'anneau intérieur (2) présente un revêtement en caoutchouc (6) pour assurer l'appui et l'étanchéité sur un axe ou un arbre (5), dans laquelle l'élément de l'un des deux anneaux s'étendant en direction radiale et opposée au fluide à contenir (4) présente une lèvre d'étanchéité (9) en caoutchouc élastique faisant saillie dans la cavité creuse et qui repose sur l'élément de l'autre anneau s'étendant en direction axiale, dans laquelle au moins une lèvre de protection contre les poussières (7, 8) est montée en direction axiale à une certaine distance derrière la lèvre d'étanchéité, dans laquelle l'élément de l'autre anneau dirigé vers le fluide à contenir et s'étendant en direction radiale réalise l'étanchéité par rapport à l'élément du premier anneau s'étendant dans la direction axiale au moyen d'un joint à labyrinthe (12), caractérisée en ce que la surface de contact de l'autre anneau correspondant à la lèvre de protection contre les poussières (7, 8) se transforme en surface de contact de cet anneau correspondant à la lèvre d'étanchéité (9), avec diminution simultanée de son diamètre, et que la surface de contact de cet anneau correspondant à la lèvre de protection contre les poussières et l'axe ou l'arbre (5) à rendre étanche forment ensemble un angle aigu.

2. Cartouche d'étanchéité selon la revendication 1, caractérisée en ce que l'angle aigu est compris entre 30 et 60°.

3. Cartouche d'étanchéité selon les revendications 1 et 2, caractérisée en ce que la lèvre d'étanchéité (9) et la lèvre de protection contre les poussières (7, 8) sont fixées à l'anneau intérieur, pour rendre étanche un boîtier tournant sur un axe immobile.

4. Cartouche d'étanchéité selon les revendications 1 et 2, caractérisée en ce que la lèvre d'étanchéité (9) et la lèvre de protection contre les poussières (7, 8) sont fixées à l'anneau extérieur, pour rendre étanche un arbre en rotation.

5. Cartouche d'étanchéité selon les revendications 1 à 4, caractérisée en ce qu'au moins deux lèvres de protection contre les poussières (7, 8) sont prévues.

Fig.1

Fig. 2

Fig. 3

Fig. 4

Fig. 5

Fig. 6